# EUROPEAN PATENT APPLICATION

(11) **EP 1 895 552 A1**
(43) Date of publication of application: **05.03.2008**
(21) Application number: 06712074.1
(22) Date of filing: 20.01.2006
(51) Int. Cl.: H01G 4/224, H01F 27/32, H01G 4/18, H01G 4/20

(54) **HIGHLY HEAT-RESISTANT STATIC DEVICE FOR ELECTRIC POWER**

(30) Priority: 27.01.2005 JP 2005020264
(71) Applicant: THE KANSAI ELECTRIC POWER CO., INC., Osaka-shi, Osaka 530-8270 (JP)
(72) Inventor: SUGAWARA, Yoshitaka, c/o The Kansai Electric Power Co., Inc., Kita-ku, Osaka-shi, Osaka 5308270 (JP)
(74) Representative: Stoner, Gerard Patrick
(86) International application number: PCT/JP2006/300849
(87) International publication number: WO 2006/080251

(57) **Abstract**

At least one component of a static device for electric power is covered by a synthetic polymer compound A. The synthetic polymer compound A is formed by connecting at least one first organosilicon polymer and at least one second organosilicon polymer, to prepare a third organosilicon polymer, and then connecting plural molecules of the resultant third organosilicon polymer. The first organosilicon polymer has a crosslinking structure with a siloxane bonding. The second organosilicon polymer has a linear connecting structure with a siloxane bonding. The third organosilicon polymer is formed by connecting the first organosilicon polymer and the second organosilicon polymer with a siloxane bonding and has a molecular weight of 20,000 to 800,000. The synthetic polymer compound (A) has a three-dimensional stereostructure, which is formed by connecting plural molecules of the third organosilicon polymer with a covalent bonding being generated by an addition reaction.

## Description

### TECHNICAL FIELD

The present invention relates to highly heat-resistant static devices for electric power having particularly high heat resistance, such as transformers, capacitors and reactors.

### BACKGROUND ART

Static devices for electric power, i.e., electric power devices having no movable parts, typified by, for example, transformers, capacitors and reactors, are required to be made of noncombustible materials to ensure insulation from the viewpoint of safety, such as disaster prevention. However, it is necessary to refrain from using, for example, PCB (polychlorinated biphenyl) serving as a noncombustible insulating oil and SF₆ (sulfur hexafluoride) serving as a noncombustible gas having been used conventionally, to protect the global environment. Hence, molded static devices for electric power being covered (also expressed as molded) and insulated by using resins that are not noncombustible have begun to be used widely.

A typical and conventional molded transformer will be described below as an example of the molded static devices for electric power.

This conventional molded transformer is a three-phase transformer, rated at 750 kW, for transforming a high voltage of 6 kV into a low voltage of 210 V. The coil of each phase has a low-voltage winding (secondary molding) and a high-voltage winding (primary molding) wound around the outside of the low-voltage winding. The coil of each phase is shielded by using epoxy resin or silicon resin serving as an insulating material. Each iron core is provided at the central portion of the secondary molding. An upper frame and a lower frame are provided to sandwich the upper and lower portions of the iron core, and the three sets of iron cores and coils are assembled into one unit. This kind of molded transformer is sometimes installed in its original form for natural air cooling; however, the transformer is sometimes configured so as to be accommodated inside a cubicle or a case and forcibly air-cooled'.
Patent Document 1: Japanese Patent Application Laid-Open Publication No. 2003-158018
Patent Document 2: Japanese Patent Application Laid-Open Publication No. 2002-158118
Patent Document 3: Japanese Patent Application Laid-Open Publication No. 2002-324727
Patent Document 4: Japanese Patent Application Laid-Open Publication No. 2002-141247
Nonpatent Document 1: "Electrical Engineering Handbook (6th ed.)" (issued by the Institute of Electric Engineers of Japan), pp. 184-192, 699-701 , 706, 732-739

### DISCLOSURE OF THE INVENTION

### PROBLEM TO BE SOLVED BY THE INVENTION

In such a molded transformer molded by using epoxy resin as described in the conventional example described above, the upper limit of the temperature of its coil is set at approximately 70 to 120°C from the viewpoint of the heat resistance of epoxy resin, and fan cooling is carried out frequently so that the temperature does not become equal to or higher than this upper limit during usage. Furthermore, if a large short-circuit current or a large lightning surge current flows during usage in this molded transformer, the temperature of the coil may become higher than the upper limit described above. Epoxy resin does not have so high heat resistance, thereby usually deteriorating at a high temperature of 180°C or more, becoming low in pliability and becoming hard. As a result, when the temperature of the coil returns from the high-temperature state to the room-temperature state, numerous cracks are generated frequently inside the epoxy resin. If such cracks are generated, the molded epoxy resin cannot withstand high electric fields, and the withstand voltage characteristic thereof deteriorates.

Although the heat resistance of silicon rubber is better than that of epoxy resin, the upper limit thereof is approximately 200°C. Silicon rubber is a synthetic polymer compound containing polymethylphenylsiloxane having the linear structure of siloxane bonds (Si-O-Si bonds). When the temperature of the coil molded (covered) by using silicon rubber becomes a high temperature of 200°C or more, the pliability of the polymethylphenylsiloxane becomes low; when the temperature of the coil becomes 220°C or more in the air, the surface of the polymethylphenylsiloxane is vitrified and becomes completely hard. This is presumed that the methyl groups and the phenyl groups in the side chains of the polymethylphenylsiloxane are decomposed and evaporate. Hence, when the temperature of the coil returns to the room temperature, numerous voids and cracks are generated inside the covering formed of the polymethylphenylsiloxane. If voids and cracks are generated, the polymethylphenylsiloxane used for the molding cannot withstand high electric fields, and the withstand voltage characteristic deteriorates.

Epoxy resin and silicon rubber are relatively low in heat conductivity, 0.1 to 1.0 W/mK, and the heat generated from coils molded by using these cannot be dissipated sufficiently. Hence, the rated capacity must be set smaller than that of a coil that is not molded. In addition, since the heat dissipation is low, the temperature of the molded coil rises when a short-circuit current larger than the rated current flows for a relatively short time. As a result, for example, the insulating material and the covering material of the coil conductors, and the contact preventing plate that prevents the low-voltage winding from making contact with the high-voltage winding and is provided therebetween are thermally destructed sometimes, whereby the withstand voltage performance is impaired.

As described above, molded static devices for electric power, such as molded transformers, molded capacitors and molded reactors, molded by using conventional polymer compounds, such as epoxy resin and silicon rubber, are not sufficient in heat resistance and heat dissipation, and cannot withstand high electric fields at high temperature, thereby having a problem that the withstand voltage characteristic is improper.

The present invention is intended to provide a highly heat-resistant static device for electric power being high in heat resistance and excellent in heat dissipation.

### MEANS FOR SOLVING PROBLEM

A highly heat-resistant static device for electric power according to the present invention is characterized in that at least one component of the static device for electric power is covered with a synthetic polymer compound A.
The synthetic polymer compound A is formed by connecting multiple third organosilicon polymers, each of which is formed by connecting at least one kind of first organosilicon polymer and at least one kind of second organosilicon polymer. The first organosilicon polymer has a crosslinked structure connected with siloxane bonds. The second organosilicon polymer has a linear connection structure connected with siloxane bonds. The third organosilicon polymer is formed by connecting the first organosilicon polymer and the second organosilicon polymer with siloxane bonds, and has a molecular weight of 20,000 to 800,000. Furthermore, the synthetic polymer compound A has a three-dimensional stereostructure formed by connecting multiple third organosilicon polymers with covalent bonds generated by an addition reaction.

### EFFECT OF THE INVENTION

since the components of the static device for electric power according to the present invention are covered with the synthetic polymer compound A having high heat resistance and high withstand voltage, it is possible to obtain a static device for electric power having high heat resistance and high withstand voltage.

The main components of the highly heat-resistant static device for electric power according to the present invention are covered with the synthetic polymer compound A. The synthetic polymer compound A is formed by connecting multiple large organosilicon polymers with covalent bonds generated by an addition reaction and has a three-dimensional stereostructure. The large organosilicon polymer is formed, for example, by connecting the first organosilicon polymer and the second organosilicon polymer, the molecular weight of which is larger than that of the first organosilicon polymer, alternately and linearly with siloxane bonds, and has a molecular weight of 20,000 to 800,000. The first organosilicon polymer consists primarily of polysilsesquioxane having at least a crosslinked structure connected with siloxane bonds (Si-O-Si bonds). The second organosilicon polymer has a linear connection structure connected with siloxane bonds. The synthetic polymer compound A has high heat resistance and also has high withstand voltage even at high temperature. Hence, with the present invention, it is possible to obtain a highly heat-resistant static device for electric power.

In addition, with the present invention, the synthetic polymer compound A is filled with insulating ceramic particles having high heat conductivity, whereby it is possible to obtain a highly heat-conductive synthetic polymer compound A, the heat conductivity of which is improved better than the heat conductivity of the synthetic polymer compound A. Since the heat dissipation (heat radiation) of the above-mentioned components covered with the highly heat-conductive synthetic polymer compound A is improved, it is possible to obtain a highly heat-resistant static device for electric power being excellent in heat dissipation. Since the static device is excellent in heat dissipation, an air-cooling apparatus or the like is not required; hence, the device has a simplified configuration and becomes small in size and low in price. Furthermore, since the device is excellent in heat resistance and heat dissipation, the current density can be raised and the rated capacity can be increased. When the rated capacity remains the same, the device can be made small in size; it is thus possible to obtain a highly heat-resistant static device for electric power that is light in weight, small in size and low in price.

The synthetic polymer compound A has very high affinity for the various materials constituting the highly heat-resistant static device for electric power and is firmly attached to the surfaces of the main components (for example, coils) and the case of the device; as a result, high moisture resistance can be attained, and high withstand voltage performance with high reliability at high temperature in particular can also be attained.

### BRIEF DESCRIPTION OF THE DRAWINGS

FIG. 1 is a perspective view showing a molded transformer according to a first embodiment of the present invention;
FIG. 2 is a partially cutaway perspective view showing a molded capacitor according to a third embodiment of the present invention;
FIG. 3 is a perspective view showing a molded capacitor according to a fourth embodiment of the present invention.

### EXPLANATIONS OF REFERENCE NUMERALS

- 10, 11, 12: molded coil
- 30: molded capacitor
- 31 a, 31 b, 31 c: capacitor element
- 33: secondary molding covering material
- 50: molded capacitor
- 51: capacitor element
- 54: covering material

### BEST MODES FOR CARRYING OUT THE INVENTION

The best modes of the present invention will be described below.

The highly heat-resistant static device for electric power according to the present invention is characterized in that at least the main components of the device are covered with a novel synthetic polymer compound A. The main components of the device are, for example, coils in the case of transformers and reactors, and in the case of capacitors, the main components are capacitor elements containing dielectric materials. These components have high heat resistance and high withstand voltage.

The novel synthetic polymer compound A according to the present invention contains a first organosilicon polymer and a second organosilicon polymer. The first organosilicon polymer has a crosslinked structure connected with siloxane bonds (Si-O-Si bonds) and is at least one kind selected from the group consisting of polyphenylsilsesquioxane, polymethylsilsesquioxane, polymethylphenylsilsesquioxane, polyethylsilsesquioxane, and polypropylsilsesquioxane. The second organosilicon polymer has a linear connection structure connected with siloxane bonds and is at least one kind selected from the group consisting of polydimethylsiloxane, polydiethylsiloxane, polydiphenylsiloxane, and polymethylphenylsiloxane. The first organosilicon polymer and the second organosilicon polymer are connected alternately and linearly with siloxane bonds, thereby forming a large third organosilicon polymer. The synthetic polymer compound A has a three-dimensional stereostructure in which multiple third organosilicon polymers are connected three-dimensionally with covalent bonds generated by an addition reaction.

The synthetic polymer compound A may be mixed (also expressed as filled) with insulating ceramic particles having high heat conductance, i.e., high heat conductivity. As insulating ceramic materials having high heat conductivity, for example, aluminum nitride (expressed as AIN), beryllium oxide (expressed as BeO), alumina (expressed as Al₂O₃) and polycrystalline insulating SiC are available. The highly heat-resistant synthetic polymer compound A is obtained by filling the synthetic polymer compound A with at least one kind of the above-mentioned insulating ceramic materials.

In order that the heat-resistant temperature of the synthetic polymer compound A is raised and the pliability thereof is maintained after curing, it is preferable that the first organosilicon polymer and the second organosilicon polymer are connected alternately and linearly with siloxane bonds to form the large third organosilicon polymer having a weight-average molecular weight (hereafter simply referred to as molecular weight) of 20,000 to 800,000, and that multiple third organosilicon polymers are connected with alkylene groups.

The first organosilicon polymer having a crosslinked structure connected with siloxane bonds is excellent in electrical insulation and heat resistance but is excessively large in viscosity, thereby being very low in fluidity and in pliability after curing. For this reason, the covering cannot be made thick, and the withstand voltage cannot be raised. With the present invention, the first organosilicon polymer and the second organosilicon polymer having a linear connection structure connected with siloxane bonds are connected alternately and linearly. Hence, the fluidity and pliability provided for the second organosilicon polymer are not lost, and the excellent heat resistance of the first organosilicon polymer is maintained; as a result, it is possible to obtain the synthetic polymer compound A satisfying the two characteristics of high heat resistance and high withstand voltage. In order that the heat resistance is raised further, the molecular weight of the first organosilicon polymer should be made larger; in that case, the viscosity becomes higher, and the pliability becomes lower. Furthermore, in order that the pliability is improved, the molecular weight of the second organosilicon polymer should be made larger; in that case, the heat resistance becomes lower. As described above, the viscosity of the synthetic polymer compound A and the pliability thereof after curing can be adjusted to desired values by adjusting the respective molecular weights of the first organosilicon polymer and the second organosilicon polymer. The preferable molecular weight of the first organosilicon polymer is 200 to 70,000, and the preferable molecular weight of the second organosilicon polymer is 5,000 to 200,000. It is preferable that the molecular weight of the first organosilicon polymer should be smaller than the molecular weight of the second organosilicon polymer.

It is preferable that the insulating ceramic particles having high heat conductivity and mixed with the synthetic polymer compound A should have a nearly spherical shape having fewer sharp-pointed portions to avoid local concentration of electric fields and to attain high withstand voltage. In addition, if the mixture factor (hereafter referred to as filling factor) of the insulating ceramic particles is small, the effect of increasing heat conductivity is low; hence, it is preferable that the volumetric filling factor, i.e., the volume ratio of the filling factors, should be in the range of 15 to 85%vol. If the particle diameter of the insulating ceramic particles is excessively large, the volumetric filling factor lowers; however, even if the particle diameter is excessively small, the particles are likely to coagulate with one another, and the volumetric filling factor also lowers. For this reason, it is preferable that the particle diameter of the insulating ceramic particles should be in the range of 0.01 to 50 µm. When the insulating ceramic particles have particle diameters in the range described above, the insulating ceramic particles are effectively incorporated into the clearances in the stereostructure of the synthetic polymer compound A having the above-mentioned molecular weight. Furthermore, the insulating ceramic particles make contact with one another by setting the volumetric filling factor to 40%vol or more. Hence, it is conceivable that a high filling factor and a high heat conductivity value are obtained.

To increase the volumetric filling factor to 50% or more, it is preferable that insulating ceramic particles having different particle diameters should be blended, and the ratio of the particle diameters is preferably in the range of 1:1/10 to 1:1/200. By the filling of the insulating ceramic particles as described above, it is possible to attain a synthetic polymer compound A having a high heat conductivity of 2 to 120 W/mK. More specifically, the heat conductivity is preferably 3 to 80 W/mK. Since the insulating ceramic particles being used for the filling do not affect the connection of the synthetic polymer compound A, the heat resistance is not impaired. In addition, the influence of the insulating ceramic particles being used for the filling on the withstand voltage and the viscosity hardly causes any practical problems, provided that the filling factor and the shape of the particles are within the above-mentioned ranges.

Since the most connections in the synthetic polymer compound A according to the present invention have siloxane bonds, the compound has high insulation, i.e., high withstand voltage performance as described above. In addition, the synthetic polymer compound A has excellent adhesiveness with various metals (copper, aluminum, stainless steel, etc.) constituting coils and cases, the insulating materials and covering materials (aromatic polyamide (aramid paper), enamel, etc.) for coil conductors, various resins (epoxy resin, acrylic resin, phenol resin, etc.) constituting cases, various kinds of glass, etc. and is attached to these firmly. For this reason, firm attachment states with no clearances can be attained, and high moisture resistance can be obtained. As a result, it is possible to obtain static devices for electric power having high reliability and high withstand voltage.

For example, even if the metal serving as a coil conductor is exposed because defects, such as pin holes, are present in the insulating material and the covering material for insulating and covering the coil conductor, the synthetic polymer compound A can directly protect the surface of the metal serving as the coil conductor.

Since most of the synthetic polymer compound A according to the present invention has a structure connected with siloxane bonds, the compound is high in translucency to ultraviolet light and visible light. Hence, for example, when a coil is set in a case or a metal mold and the synthetic polymer compound A is poured therein in the process of coil covering, it is possible to visually check that air bubbles and voids are not present in the state before curing. Productivity is thus improved significantly.

The insulating ceramic particles filled in the synthetic polymer compound A slightly affect the above-mentioned translucency and the adhesiveness to materials constituting semiconductor elements, but hardly cause any practical problems, provided that the filling factor and the particle diameter are within the above-mentioned ranges.

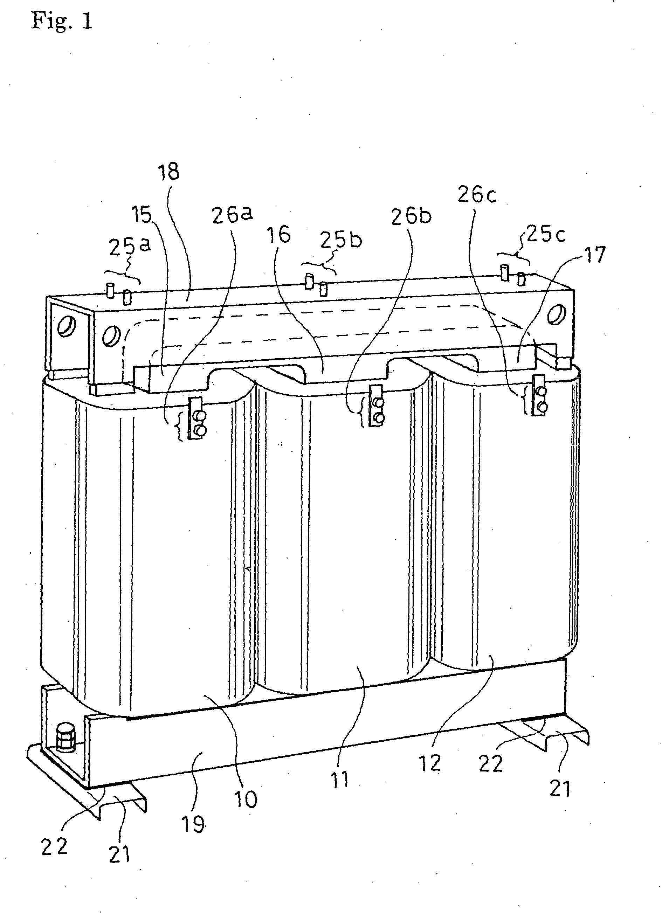

Preferred embodiments according to the present invention will be described below referred to FIG. 1 to FIG. 3. In order that the configurations of the respective components can be understood easily, the dimensions of the respective components shown in the figures do not correspond to the actual dimensions.

### FIRST EMBODIMENT

A molded transformer serving as a highly heat-resistant static device for electric power according to a first embodiment of the present invention will be described referring to FIG. 1.

FIG. 1 shows a three-phase molded transformer molded by using a synthetic polymer compound A according to the present invention serving as an insulating material. This transformer is a core-type molded transformer having a primary voltage of 6 kV, a secondary voltage of 210 V and a rated capacity of 750 kVA, for example. Its rated current on the primary side is 65 A, and its rated current on the secondary side is 2,060 A. Three molded coils 10, 11 1 and 12 are coils for three phases respectively and formed into a cylindrical shape having a nearly oval cross section. The molded coils 10 to 12 are provided with iron cores 15, 16 and 17 passing through in the vertical direction of the figure. The molded coils 10 to 12 are each configured such that the secondary low-voltage winding thereof is positioned inside and such that the primary high-voltage winding thereof is positioned outside. The three three-phase low-voltage windings are connected to low-voltage terminals 25a, 25b and 25c, respectively, and the high-voltage windings are connected to high-voltage terminals 26a, 26b and 26c, respectively. An upper frame 18 and a lower frame 19 are provided so as to sandwich the upper and lower portions of the iron cores 15 to 17. Installation plates 21 are installed at both ends of the lower frame 19 via vibration-proof rubbers 22.

The molded coils 10 to 12 are each, for example, an oval cylinder having a height of 84 cm and a major axis of 50 cm, and the upper and lower end faces and the side face thereof are covered with the synthetic polymer compound A having a thickness of approximately 4 to 5 cm. The production process for the molded coils 10 to 12 will be described below. Since the molded coils 10 to 12 have the same configuration, the molded coil 10 will be described.

A copper wire covered with polyimide resin having high heat resistance and high withstand voltage is wound around a formwork in which a hole for accommodating the iron core 15 is formed. In other words, the secondary wire and the primary wire are wound in succession according to the conventional method, thereby forming the coil 10. A contact preventing plate made of polyimide resin or the like is provided between the primary winding and the secondary winding to preserve insulation therebetween. Next, the coil 10 is inserted into a cylindrical metal mold (not shown) having a nearly oval cross section. The dimensions of the metal mold have been set so that a clearance of 4 to 5 cm is provided between the metal mold and the coil 10. The metal mold is inserted into a vacuum chamber, air is evacuated from the vacuum chamber to create low pressure, and the synthetic polymer compound A according to the present invention is poured into the clearance between the metal mold and the coil 10. Next, the metal mold and the coil 10 are heated to a temperature of approximately 60°C to lower the viscosity of the synthetic polymer compound A, the temperature is maintained for a predetermined period so that the synthetic polymer compound A is also sufficiently impregnated into the clearances in the coil 10. Next, the metal mold and the coil 10 are heated to approximately 200°C, and the temperature is maintained for a predetermined period so that the synthetic polymer compound A is cured. The synthetic polymer compound A is a transparent synthetic polymer compound containing polymethylsilsesquioxane as a first organosilicon polymer and polymethylphenylsiloxane as a second organosilicon polymer.

By appropriate adjustment of the viscosity of the synthetic polymer compound A, the coil can be wholly covered with the synthetic polymer compound A having a wall thickness of approximately 4 to 5 cm so as to be free from air bubbles, voids and clearances. If the viscosity of the synthetic polymer compound A is excessively high, the synthetic polymer compound A cannot be impregnated sufficiently into the clearances in the coil 10 during molding, and clearances are sometimes formed between the windings of the coil 10 and between the coil 10 and the synthetic polymer compound. Conversely, if the molecular weight thereof is made excessively small to lower the viscosity, the heat resistance lowers. In order that the heat resistance is made high and that appropriate pliability can be maintained even at high temperature after curing, polymethylsilsesquioxane having a molecular weight of approximately 3,000 is used as a first organosilicon polymer, polymethylphenylsiloxane having a molecular weight of approximately 10,000 is used as a second organosilicon polymer in this embodiment, and the first organosilicon polymer and the second organosilicon polymer are connected alternately and linearly with siloxane bonds, thereby forming a large third organosilicon polymer having a molecular weight of approximately 40,000. Furthermore, multiple third organosilicon polymers are connected via alkylene groups generated by an addition reaction, thereby forming a synthetic polymer compound A having a three-dimensional stereostructure. The viscosity of the synthetic polymer compound A formed as described above is approximately 10,000 cp. However, since the viscosity strongly depends on temperature, the synthetic polymer compound A is heated once to 60°C as described above so as to have a low viscosity of approximately 3,000 to 5,000 cp, the temperature is maintained for approximately 3 hours so that the compound is sufficiently impregnated into the clearances in the coil, and then the temperature is raised to 200°C for curing during the production in this embodiment. After the curing, the coil is taken out from the metal mold, and the formwork is removed, whereby the molded coils 10 to 12 are obtained.

With respect to the operation of the molded transformer shown in FIG. 1 and comprising the molded coils 10 to 12 according to this embodiment, the characteristic points thereof different from those of the conventional transformer will be described below. The rated current and the short-circuit current of the molded transformer according to this embodiment were able to be made approximately 1.6 times those of the conventional molded transformer molded by using epoxy resin and conforming to the same standard. When the transformer was operated in this state, the temperature of the molded coils 10 to 12 rose considerably, but electrical and mechanical abnormalities did not occur. This is because the 5 wt% reduction temperature of the synthetic polymer compound A is high, 410°C, and the synthetic polymer compound A can maintain its pliability even at high temperature. As the temperature of the molded coils 10 to 12 rose, the temperature of the iron cores 15 to 17 also rose; however, the iron loss of the iron cores 15 to 17 decreased as the temperature rose; as a result, it was possible to obtain an effect of raising the transformation efficiency of the transformer. Although it was presumed that the temperature of the coil rose to nearly 340°C by a short-circuit current approximately 1.5 times the above-mentioned value, the synthetic polymer compound A around the coil did not deteriorate at this temperature and was able to maintain its high withstand voltage. In addition, since the synthetic polymer compound A was able to maintain its high pliability at a high temperature of nearly 340°C, the compound was able to absorb the electromagnetic repulsive force generated between the low-voltage winding and the high-voltage winding; as a result, no cracks were formed in the synthetic polymer compound A.

The molded transformer according to this embodiment had high characteristics: an efficiency of 98.2%, a voltage regulation of 1.7%, a no-load current of 3.5% and a short-circuit impedance of 4.5%. Furthermore, results equal to or better than those of the conventional molded transformer were obtained even in an AC withstand voltage application test, a lightning pulse test and a reliability test.

As described above, in comparison with the conventional molded transformer molded by using epoxy resin, the molded transformer according to this embodiment had high heat resistance without impairing the other characteristics, and the rated current, i.e., the rated capacity, was able to be increased approximately 1.6 times, while the shape remains nearly the same.
Although the molded transformer has been described in this embodiment, the present invention is also applicable to a reactor having only one coil.

### SECOND EMBODIMENT

In a second embodiment according to the present invention, in order that the heat conductivity of the synthetic polymer compound A according to the first embodiment is raised, the synthetic polymer compound A is mixed (also expressed as filled) with insulating ceramic particles. The second embodiment relates to a highly heat-conductive synthetic polymer compound A filled with insulating ceramic particles and to a molded transformer formed by using the compound. In other words, in the second embodiment, the molded coils 10 to 12 of the molded transformer according to the first embodiment are molded by using the highly heat-conductive synthetic polymer compound A. As the insulating ceramic particles, aluminum nitride (AIN) particles having a particle diameter of approximately 2 µm were used. The insulating ceramic particles were used for the filling at a volumetric filling factor of approximately 48%vol to form the highly heat-conductive synthetic polymer compound A. By the filling of the insulating ceramic particles, the heat conductivity was able to be increased from approximately 0.3 W/mK to approximately 6.7 W/mK without substantially impairing the heat resistance, withstand voltage and pliability of the synthetic polymer compound A. The molded coils 10 to 12 were produced by using the synthetic polymer compound A according to the second embodiment in a way similar to that described in the first embodiment.

When the synthetic polymer compound A according to the second embodiment was used, the heat dissipation of the molded coils 10 to 12 was improved; hence, even if the rated current and the short-circuit current were made approximately 2.1 times the rated current and the short-circuit current of the conventional molded coil formed by using epoxy resin, no particular electrical and mechanical abnormalities occurred. The electrical performance, such as the efficiency, no-load current and short-circuit impedance, of the molded transformer according to the second embodiment was almost the same as that of the conventional molded transformer, and the reliability was superior to that of the conventional molded transformer. As described above, in comparison with the molded transformer according to the first embodiment, the molded transformer according to the second embodiment was high in heat dissipation, and the rated current, i.e., the rated capacity, was able to be increased further while the shape and dimensions remained almost the same.

### THIRD EMBODIMENT

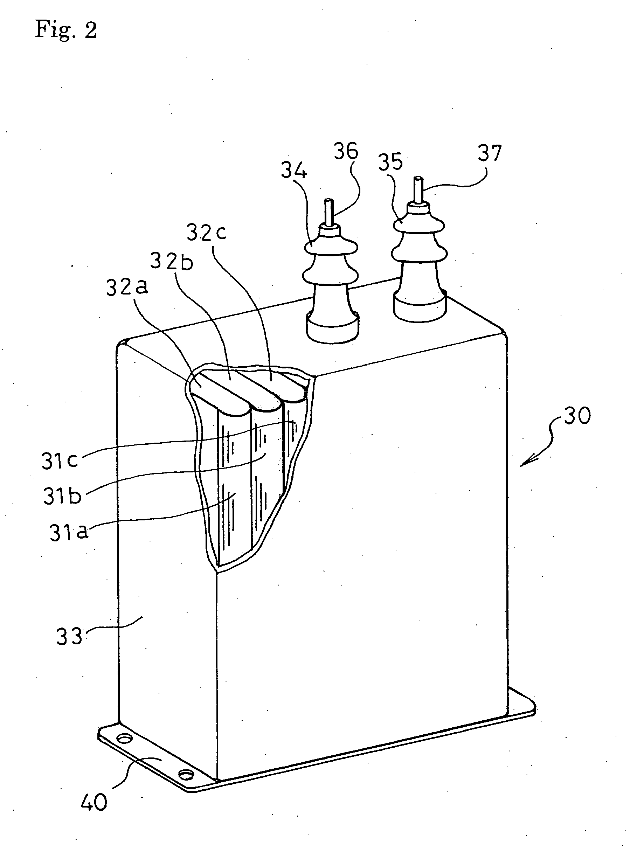

A molded capacitor serving as a highly heat-resistant static device for electric power according to a third embodiment of the present invention will be described referring to FIG. 2.

FIG. 2 is a partially cutaway perspective view showing a molded capacitor 30 formed by using the highly heat-conductive synthetic polymer compound A according to the present invention as an insulating material for molding. The molded capacitor 30 has, for example, a rated voltage of 235 V, a rated current of 95 A and a rated capacitance of 1,800 µF, and also has a width of approximately 45 cm, a height of approximately 50 cm and a depth of approximately 20 cm.

The molded capacitor 30 has, for example, 10 capacitor elements 31 a, 31 b, 31c,... (three elements are shown in FIG. 2) connected in parallel. Both terminals of the molded capacitor 30 are connected to the external connection terminals 36 and 37 derived from the bushings 34 and 35 thereof, respectively. Each capacitor element has a known configuration. The capacitor element has, for example, a configuration in which an aluminum film serving as an electrode is deposited to a thickness of approximately 20 nm on both side of a polyphenylene sulfide film having a thickness of 3 µm and serving as a dielectric material to form a sheet and this sheet is wound into a flat shape. On the upper end faces 32a, 32b and 32c of the respective capacitor elements 31 a, 31 b, 31 c, a zinc alloy is subjected to thermal spraying to form leading-out electrodes, and lead wires (not shown) are connected to the leading-out electrodes by using high-temperature solder. Lead wires are also connected to the lower end faces in a similar way although only the upper end faces of the capacitor elements are shown in FIG. 2.

The production process for the molded capacitor 30 will be described. First, the capacitor elements 31a, 31b, 31c,... are respectively covered with the highly heat-conductive synthetic polymer compound A according to the second embodiment (primary molding). Next, the lead wires of the respective capacitor elements subjected to the primary molding are connected in parallel and connected to the connection terminals 36 and 37 having the bushings 34 and 35. Next, the capacitor elements are arranged as shown in FIG. 2 and put into a container-shaped metal mold (not shown) together with the bushings 34 and 35. Next, the metal mold is put into a vacuum chamber, the air pressure inside the chamber is lowered, the highly heat-conductive synthetic polymer compound A is poured into the clearance between each capacitor element and the metal mold and then heated and cured to perform secondary molding. As a result, all the capacitor elements are covered with a secondary molding covering material 33 having a thickness of 2 to 3 cm as shown in FIG. 2. By disposing a mounting fixture 40 below the metal mold beforehand, the mounting fixture 40 is also secured to the secondary molding covering material 33. Although the molecular weight of polyphenylene sulfide is usually 50,000 or less, the molecular weight of polyphenylene sulfide is increased to approximately 60,000 to 650,000, preferably approximately 100,000 to 300,000 in this embodiment to improve heat resistance. As a result, the heat-resistant temperature of the capacitor element became 200°C.

If the viscosity of the highly heat-conductive synthetic polymer compound A according to this embodiment is excessively high, it is difficult to carry out molding so that clearances and voids are not formed between the metal mold and the respective capacitor elements. Conversely, if the molecular weight thereof is made excessively small to lower the viscosity, the heat resistance lowers. In this embodiment, in order that the highly heat-conductive synthetic polymer compound A has appropriate viscosity, polyethylsilsesquioxane having a molecular weight of approximately 1,500 is used as a first organosilicon polymer, polymethylsiloxane having a molecular weight of approximately 60,000 is used as a second organosilicon polymer, and the first organosilicon polymer and the second organosilicon polymer are connected alternately and linearly with siloxane bonds, thereby forming a large third organosilicon polymer having a molecular weight of approximately 200,000. Furthermore, multiple third organosilicon polymers are connected via alkylene groups generated by an addition reaction, thereby forming a synthetic polymer compound A having a three-dimensional stereostructure. The synthetic polymer compound A is filled with insulating ceramic particles so that the synthetic polymer compound A has desired high heat conductivity. More specifically, AIN particles having a particle diameter of approximately 3 µm and AIN superfine particles having a particle diameter of approximately 0.1 µm, at a volume ratio of 6:4, are filled in the synthetic polymer compound A so that a volumetric filling factor of approximately 49%vol is obtained. As a result, the synthetic polymer compound A having a high heat conductivity of approximately 9.5 W/mK was obtained without impairing the withstand voltage performance.

In the primary molding and the secondary molding described above, the fact that the viscosity of the synthetic polymer compound A strongly depends on temperature was used to sufficiently impregnate the synthetic polymer compound A between the capacitor elements. In other words, the synthetic polymer compound A was heated to a temperature of approximately 65°C before curing to obtain a low viscosity of approximately 4,000 to 6,000 cp, the temperature was maintained for three hours, and then curing was carried out at 200°C.

The molded capacitor 30 according to the third embodiment showed the following characteristics. The withstand voltage was approximately 380 V or more at a high temperature of 200°C. The withstand voltage (maximum allowable voltage) was approximately 1.6 times the withstand voltage of the conventional molded capacitor molded by using epoxy resin at 120°C. Similarly, the maximum allowable current was approximately 1.5 times. When a voltage of 100 V DC was applied at a temperature of 20°C, the insulation resistance was 2,000 MΩ or more, a sufficiently high value. That is to say, practically sufficiently high insulation was obtained at high temperature. The temperature dependency of the capacitance was also excellent. More specifically, the capacitance had almost no temperature dependency at up to 130°C and increased slightly at 140°C or more; the increment was 5% or less even at 200°C, a level not causing a practical problem. The loss factor mainly caused by the dielectric loss of the dielectric material was 0.13% or less at a temperature of 20°C and at a frequency of 1 kHz, an excellent value. In other words, a practically sufficient loss factor was obtained securely even at high temperature. In addition, the molded capacitor was strong against heat generation due to higher harmonics and surges. More specifically, the molded capacitor was able to withstand the voltages of higher harmonics and surges, the withstand voltage thereof being approximately 1.4 times that of the conventional epoxy resin molded capacitor. When a long-term continuous voltage application test was conducted for 3,000 hours by applying a voltage of 1.5 times the rated voltage, no significant changes were found in various characteristics, such as capacitance and loss factor. Furthermore, when a moisture resistance test was carried out at a temperature of 80°C and at a humidity of 95% for a long time of 1,000 hours or more, no particular abnormalities were caused. Still further, when the same moisture resistance test as that described above was carried out after a temperature cycle test was conducted 100 times while the temperature was changed in the range of 30 to 190°C, no abnormalities were caused. These are obtained as the result of the improved heat resistance and heat dissipation of the molded capacitor 30 according to this embodiment. When the highly heat-conductive synthetic polymer compound A according to this embodiment was inspected visually after the long-term continuous voltage application test and the moisture resistance test, there found no white turbidity or cracks on the outer circumference and inside. In addition, when the molded capacitor 30 according to this embodiment was disassembled and inspected, the adhesiveness between each capacitor element and the highly heat-conductive synthetic polymer compound A was excellent, and there found no cracks or voids in the highly heat-conductive synthetic polymer compound A.

As described above, the heat resistance of the molded capacitor 30 according to this embodiment was able to be improved significantly in comparison with the conventional molded capacitor molded by using epoxy resin, and the maximum allowable voltage, the maximum allowable current, the withstand voltage against the voltages of higher harmonics and the withstand voltage against surge voltages were able to be increased approximately 1.4 to 1.5 times those of the conventional molded capacitor having almost the same shape.

### FOURTH EMBODIMENT

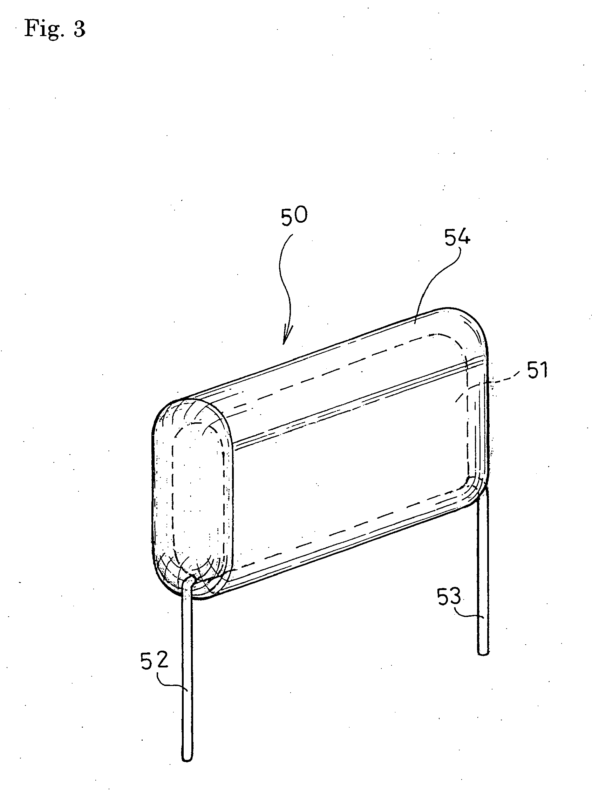

A plastic molded film capacitor serving as a highly heat-resistant static device for electric power according to a fourth embodiment of the present invention will be described referring to FIG. 3.

FIG. 3 shows a molded capacitor 50 formed by using the highly heat-conductive synthetic polymer compound A according to the present invention as an insulating material for molding. The molded capacitor 50 has a rated voltage of 1,000 V, a rated current of 5 A and a rated capacitance of 10 µF.

The capacitor element 51 thereof has a known configuration. The capacitor element 51 has a configuration in which a polytetrafluoroethylene film having a thickness of approximately 6 µm is used as a dielectric material, an aluminum electrode having a thickness of approximately 30 nm (nanometer) is deposited to both side faces thereof, and this is folded into a rectangular shape. Lead pins 52 and 53 are respectively installed to both ends of the capacitor element 51 by using high-temperature solder having a melting point of 250°C or more. The molded capacitor 50 is configured such that the capacitor element 51 is molded by using a covering 54 made of the highly heat-conductive synthetic polymer compound A. The external dimensions of the molded capacitor 50 are 32 mm in width, 16 mm in thickness and 26 mm in height in the direction of the lead pins 52 and 53.

Since polytetrafluoroethylene being high in melting point and withstand voltage is used as a dielectric material, the heat-resistant temperature of the capacitor element 51 can be raised. Although the molecular weight of polytetrafluoroethylene is usually 50,000 or less, the molecular weight of polytetrafluoroethylene is increased to approximately 60,000 to 700,000, preferably 100,000 to 500,000 in this embodiment to improve heat resistance. More preferably, the molecular weight of polytetrafluoroethylene should be increased to 200,000 to 350,000. As a result, the heat resistant temperature of the capacitor element became 230°C.

If the viscosity of the highly heat-conductive synthetic polymer compound A is excessively high, it is difficult to carry out molding so that clearances and voids are not formed. Conversely, if the molecular weight thereof is made excessively small to lower the viscosity, the heat resistance lowers. In this embodiment, in order that the highly heat-conductive synthetic polymer compound A has desired viscosity, polyphenylsilsesquioxane having a molecular weight of approximately 10,000 is used as a first organosilicon polymer, polydimethylsiloxane having a molecular weight of approximately 90,000 is used as a second organosilicon polymer, and the first organosilicon polymer and the second organosilicon polymer are connected alternately and linearly with siloxane bonds to form a large third organosilicon polymer having a molecular weight of approximately 300,000. Furthermore, multiple third organosilicon polymers are connected via alkylene groups generated by an addition reaction, thereby forming a synthetic polymer compound A having a three-dimensional stereostructure. Moreover, the synthetic polymer compound A is filled with insulating ceramic particles so that the synthetic polymer compound A has desired high heat conductivity. More specifically, AIN particles having a diameter of approximately 2.5 µm and AIN superfine particles having a diameter of approximately 0.07 µm, at a volume ratio of 6:4, are filled in the synthetic polymer compound A so that a volumetric filling factor of approximately 63%vol is obtained. As a result, a high heat conductivity of approximately 21 W/mK was attained without impairing the withstand voltage performance.

When the capacitor element 51 was put into a bath containing the highly heat-conductive synthetic polymer compound A, dipped and molded, the temperature was set to approximately 70°C so that the highly heat-conductive synthetic polymer compound A had a low viscosity of approximately 3,500 to 5,000 cp and so that the compound was sufficiently impregnated into the clearances in the capacitor element, and the capacitor element 51 was dipped therein for approximately 30 minutes. Then, the capacitor element 51 was taken out from the bath and heated in an inert gas atmosphere at 220°C to cure the highly heat-conductive synthetic polymer compound A.

The molded capacitor 50 according to the fourth embodiment showed the following characteristics. The withstand voltage was approximately 1,600 V or more at a high temperature of 230°C, whereby a high maximum allowable voltage of approximately 1.6 times that of the conventional molded capacitor molded by using epoxy resin was attained. Similarly, the maximum allowable current was approximately 1.8 times. The insulation resistance was 3,000 MΩ or more at a temperature of 20°C and 500 V DC. That is to say, the insulation resistance was higher than that of the conventional molded capacitor. The temperature dependency of the capacitance was also excellent. More specifically, the capacitance had almost no temperature dependency at up to 180°C, and the variation at a temperature in the range of 180 to 230°C was 5% or less, a level not causing a practical problem. The loss factor mainly caused by the dielectric loss of the dielectric material was 0.13% or less at a temperature of 20°C and at a frequency of 1 kHz, an excellent value. In other words, a practically sufficient loss factor was obtained securely even at high temperature. In addition, the molded capacitor was strong against heat generation due to higher harmonics and surges, and the molded capacitor was able to withstand the voltages of higher harmonics and surges, the withstand voltage thereof being approximately 1.8 times or more that of the conventional epoxy resin molded capacitor. When a long-term continuous voltage application test was conducted for 3,000 hours by applying a voltage of 1.5 times the rated voltage, no significant changes were found in various characteristics, such as capacitance and loss factor. Even when a moisture resistance test was carried out at a temperature of 80°C and at a humidity of 95% for a long time of 1,000 hours or more, no particular abnormalities were caused. Still further, when the same moisture resistance test as that described above was carried out after a temperature cycle test was conducted 100 times in the temperature range of 30 to 200°C, no abnormalities were caused. When the highly heat-conductive synthetic polymer compound A according to this embodiment was inspected visually after the long-term continuous voltage application test and the moisture resistance test, there found no white turbidity or cracks on the outer circumference and inside. In addition, when the molded capacitor 50 was disassembled and inspected to check the adhesiveness between the capacitor element 51 and the covering 54, the adhesiveness was excellent, and there found no cracks or voids.

As described above, the heat resistance of the molded capacitor 50 according to this embodiment was able to be improved without impairing the other characteristics, and the maximum allowable voltage, the maximum allowable current, the withstand voltage against the voltages of higher harmonics and the withstand voltage against surge voltages were able to be increased further while its shape remained almost the same as that of the conventional molded capacitor.

Although the four embodiments have been described above, the present invention includes more application ranges or derived structures. These will be described below.

The present invention is also applicable to both core-type and shell-type transformers, for example. In addition, the present invention is also applicable to both single-phase and three-phase transformers. Furthermore, the present invention is also applicable to transformers accommodated in metal cases, transformers molded and sealed in cases, pole-mounted transformers and street transformers. Moreover, the present invention is also applicable to molded transformers having a large capacity of 70,000 to 220,000 V and molded transformers having a large capacity of 10 to 100 MW, for example. Still further, since the present invention is suited for reduction in size and weight, great advantages can be obtained by applying the present invention to the transformers for vehicles, such as electric trains and electric automobiles, and to portable transformers for emergency situations, such as accidents.

The present invention is also applicable to capacitors comprising other highly heat-resistant films serving as dielectric materials. For example, a polyimide film having a molecular weight of approximately 5,000 to 250,000, more preferably approximately 10,000 to 100,000, may also be used. In addition, the present invention is also applicable to ceramic capacitors, electric double-layer capacitors, etc.

The present invention is also applicable to capacitors comprising dielectric films in which dielectric ceramic particles are dispersed. For example, the particles of dielectric ceramic, such as barium titanate, titanium oxide or strontium titanate, are dispersed in a film made of polyphenylene sulfide, polytetrafluoroethylene or polyimide. The particle diameter of the dielectric ceramic particles is preferably 0.01 to 5 µm. Hence, the heat resistance can be raised further, and the electrostatic capacitance per unit volume can be increased.

The present invention is also applicable to large transformers for high voltages. In addition, the present invention is also applicable to capacitors constructed in chip form. Furthermore, the present invention is also applicable to capacitors accommodated in metal cases and capacitors molded and sealed. Moreover, the present invention is also applicable to molded film capacitors having a rated capacity of 1 kW to 10 MW for 3.3 or 6,6 kV class.

The present invention is applicable to not only voltage transformers and capacitors but also other static devices for electric power. The other static devices for electric power include reactors, transformers, solid-state arrestors for electric power, fuses for electric power, etc. The solid-state arrestors for electric power incorporate solid-state elements typified by resistors and zinc oxide elements.

The present invention may also be applied to components of large static devices for electric power. For example, the highly heat-resistant capacitors according to the present invention may be applied to the capacitor sections of capacitor bushings being used widely for oil-immersed transformers having high withstand voltage of 33 kV or more and large capacity.

The present invention may also be applied to the components of static devices being used partly for electric power devices having movable parts. The movable parts include breakers, switches, various kinds of large switching devices, various kinds of motors, electric generators, etc.

The first organosilicon polymer constituting the synthetic polymer compound A can be arbitrarily selected from the group consisting of polyphenylsilsesquioxane, polymethylsilsesquioxane, polymethylphenylsilsesquioxane, polyethylsilsesquioxane and polypropylsilsesquioxane and can be used. In addition, two or more kinds of these may also be used.

The second organosilicon polymer constituting the synthetic polymer compound A can be arbitrarily selected from the group consisting of polydimethylsiloxane, polydiethylsiloxane, polydiphenylsiloxane and polyphenylmethylsiloxane and can be used. In addition, two or more kinds of these may also be used.

The packages of molded static devices for electric power may also be formed of other epoxy resins having high heat resistance, as a matter of course, such as an epoxy resin in which, for example, polyimidazole is used as a curing agent.

As insulating ceramics, insulating ceramics having high heat conductivity, such as diamond and boron nitride, may also be used.

### INDUSTRIAL APPLICABILITY

The present invention can significantly improve the heat resistance of static devices for electric power, thereby being very useful in industry.

## Claims

1. A highly heat-resistant static device for electric power being **characterized in that**:
at least one component thereof is covered with a synthetic polymer compound A,
said synthetic polymer compound A is formed by connecting multiple third organosilicon polymers, each of which is formed by connecting at least one kind of first organosilicon polymer and at least one kind of second organosilicon polymer,
said first organosilicon polymer has a crosslinked structure connected with siloxane bonds,
said second organosilicon polymer has a linear connection structure connected with siloxane bonds,
said third organosilicon polymer is formed by connecting said first organosilicon polymer and said second organosilicon polymer with siloxane bonds, and has a molecular weight of 20,000 to 800,000, and
said synthetic polymer compound A has a three-dimensional stereostructure formed by connecting multiple third organosilicon polymers with covalent bonds generated by an addition reaction.

2. The highly heat-resistant static device for electric power according to claim 1 , wherein
said first organosilicon polymer is at least one kind selected from the group consisting of polyphenylsilsesquioxane, polymethylsilsesquioxane, polymethylphenylsilsesquioxane, polyethylsilsesquioxane, and polypropylsilsesquioxane, and
said second organosilicon polymer is at least one kind selected from the group consisting of polydimethylsiloxane, polydiethylsiloxane, polydiphenylsiloxane, and polyphenylmethylsiloxane.

3. The highly heat-resistant static device for electric power according to claim 1, wherein
the molecular weight of said first organosilicon polymer is in the range of 200 to 70,000,
the molecular weight of said second organosilicon polymer is in the range of 5,000 to 200,000, and
the molecular weight of said first organosilicon polymer is smaller than the molecular weight of said second organosilicon polymer.

4. The highly heat-resistant static device for electric power according to claim 1, wherein said synthetic polymer compound A contains insulating ceramic particles having high heat conductivity.

5. The highly heat-resistant static device for electric power according to claim 1, wherein a capacitor element having dielectric and conductive materials serving as said component is covered with said synthetic polymer compound A.

6. The highly heat-resistant static device for electric power according to claim 1, wherein a coil serving as said component is covered with said synthetic polymer compound A.

7. The highly heat-resistant static device for electric power according to claim 4, wherein said insulating ceramic is at least one kind selected from the group consisting of aluminum nitride, beryllium oxide, alumina, and polycrystalline insulating silicon carbide.

8. The highly heat-resistant static device for electric power according to claim 4, wherein the particle diameter of said insulating ceramic particles is in the range of 0.01 to 50 µm.

9. The highly heat-resistant static device for electric power according to claim 4, wherein the volumetric filling factor of said insulating ceramic particles in said synthetic polymer compound A is in the range of 15 to 80%vol.

10. The highly heat-resistant static device for electric power according to claim 4, wherein said insulating ceramic particles include particles having different multiple particle diameters, the ratio of the particle diameters being in the range of 1:1/10 to 1:1/200.

11. The highly heat-resistant static device for electric power according to claim 5, wherein said capacitor element is comprised of a conductor film formed on both sides of a film, and the film is made of one kind of polymer selected from the group consisting of polyphenylene sulfide, polytetrafluoroethylene, and polyimide.

12. The highly heat-resistant static device for electric power according to claim 5, wherein
said capacitor element is comprised of a conductor film formed on both sides of a film,
the film is made of one kind of polymer selected from the group consisting of polyphenylene sulfide having a molecular weight of 100,000 to 300,000, polytetrafluoroethylene having a molecular weight of 100,000 to 500,000 and polyimide having a molecular weight of 100,000 to 500,000, and
the particles of at least one kind of dielectric ceramic selected from the group consisting of barium titanate, titanium oxide and strontium titanate are dispersed in the film.
